# EUROPÄISCHE PATENTANMELDUNG

(11) **EP 2 253 360 A1**
(43) Veröffentlichungstag der Anmeldung: **24.11.2010**
(21) Anmeldenummer: 09006818.0
(22) Anmeldetag: 20.05.2009
(51) Int. Cl.: A63F 13/02

(54) **Körperpflegegerät des persönlichen Bedarfs**

(71) Anmelder: Braun GmbH, 61476 Kronberg/Taunus (DE)
(72) Erfinder: Schmid, Michael, 60599 Frankfurt/Main (DE); McGarry, Rory, 60385 Frankfurt/Main (DE); Stegmann, Wolfgang, 60389 Frankfurt/Main (DE); Phong Vu, Duy, 65824 Schwalbach (DE); Heil, Benedikt, 61239 Ober-Mörlen (DE); Stratmann, Martin, 60318 Frankfurt/Main (DE); Schaefer, Norbert, 60320 Frankfurt/Main (DE); Kunath, Ivo, 61476 Kronberg/Taunus (DE); Vetter, Ingo, 61184 Karben (DE); Fischer, Vladimir, 65843 Sulzbach (DE)

(57) **Zusammenfassung**

Die vorliegende Erfindung betrifft ein Körperpflegegerät des persönlichen Bedarfs, insbesondere in Form einer Zahnbürste, mit einem handführbaren Pflegewerkzeug, insbesondere Zahnbürste, sowie einer Anzeigevorrichtung zur Anzeige von interaktiven Darstellungen, die mittels einer Steuervorrichtung vom dem Pflegewerkzeug her interaktiv steuerbar sind. Erfindungsgemäß umfasst die Steuervorrichtung einen Spielecontroller zur Steuerung eines Videospiels auf der Anzeigevorrichtung sowie einen Informationscontroller zur Bereitstellung von Informationen auf der Anzeigevorrichtung, wobei eine Umschaltvorrichtung, die durch eine Umschalttaste betätigbar ist, zum Umschalten von der vom Spielecontroller generierten Spielanzeige zu der von dem Informationscontroller generierten Informationsanzeige auf der Anzeigevorrichtung und/oder umgekehrt vorgesehen ist. Die genannten Spiele- und Informationscontroller brauchen hierbei keine separaten Hardwarebausteine sein, sondern können in Form verschiedener Softwaremodule in einem gemeinsamen Microcontroller verwirklicht sein.

## Beschreibung

### Körperpflegegerät des persönlichen Bedarfs

Die vorliegende Erfindung betrifft ein Körperpflegegerät des persönlichen Bedarfs, insbesondere in Form einer Zahnbürste, mit einem handführbaren Pflegewerkzeug, insbesondere Zahnbürste, sowie einer Anzeigevorrichtung zur Anzeige von interaktiven Darstellungen, die mittels einer Steuervorrichtung vom dem Pflegewerkzeug her interaktiv steuerbar sind.

Um den Anreiz zum regelmäßigen Zähneputzen zu erhöhen, werden mittlerweile an Zahnputzvorrichtungen Bildschirme bzw. Displays vorgesehen, auf denen Videospiele dargestellt werden, die von der Zahnbürste her interaktiv gesteuert werden können. Durch den zusätzlich gegebenen Unterhaltungswert werden insbesondere Kinder dazu motiviert, regelmäßig ihre Zähne zu putzen. Alternativ oder zusätzlich zu reinen Unterhaltungsspielen können dabei auch Anleitungen zum effizienten und wirksamen Reinigen der Zähne dargestellt werden, beispielsweise dergestalt, dass der Zahnbürstenbenutzer die dargestellten Bildsequenzen nacharbeitet.

Beispielsweise beschreibt die WO 2007/112112 A1 eine Zahnputzvorrichtung, bei der an der Basisstation zum Laden der Zahnbürste ein Bildschirm vorgesehen ist, auf dem während des Zähneputzens Videospiele gezeigt werden. Das Videospiel ist hierbei von der Zahnbürste her steuerbar. Einerseits besitzt die Zahnbürste manuell betätigbare Eingabetasten zur Eingabe von Steuerbefehlen für das Videospiel. Andererseits werden an der Zahnbürste mittels diverser Sensoren Putzparameter wie Anpressdruck und bei den Putzbewegungen auftretende Beschleunigungen erfasst, wobei anhand dieser erfassten Parameter das Videospiel auf dem Bildschirm gesteuert wird. Um für einen jeweiligen Benutzer ein jeweils geeignetes Videospiel zu zeigen, wird das Aufsatzteil der Zahnbürste anhand eines Identifikationscodes identifiziert, in Abhängigkeit dessen das Videospiel oder dessen Spielregeln ausgewählt werden. Auch wenn hierdurch eine gewisse Anpassung an den individuellen Nutzer gewährleistet ist, ist der Grad der Personalisierung sowie die Anpassbarkeit an die jeweiligen Bedürfnisse begrenzt.

Aus der US 2008/0102953 A1 ist ebenfalls eine Zahnbürste bekannt, die als Eingabevorrichtung zur Steuerung einer Spielekonsole ausgebildet ist, um darauf ein Videospiel zu steuern. Ein an der Bürste angebrachter Sensor detektiert Bürstenbewegungen, wobei anhand der Bewegungssignale der Zahnbürste die Bewegung eines virtuellen Spieleobjekts des Videospiels gesteuert wird.

Die US 2006/0040246 A1 beschreibt eine elektrische Zahnbürste, die an einer Basisstation abstellbar und ladbar ist. Die Basisstation enthält ein Display, auf dem ein interaktives Spiel wie beispielsweise PAC-MAN^{®} dargestellt wird. Die Zahnbürste kommuniziert drahtlos mit der Steuervorrichtung zur Steuerung des Spiels, das durch Abnehmen der Zahnbürste von der Basisstation oder einen an der Zahnbürste angebrachten Startknopf aktiviert wird. Sensoren an der Zahnbürste erfassen deren Bewegungen, die zur Steuerung von Bewegungen von Spielcharakteren bzw. Spieleteilen auf dem Bildschirm verwendet werden. Um verschiedene Spiele ausführen zu können, können verschiedene Speicherbausteine eingesetzt werden. Je geschickter das auf dem Bildschirm dargestellte Spiel gespielt wird, desto mehr Gewinnpunkte werden dem Nutzer zugeschrieben.

Aus der DE 10153863 A1 ist eine Zahnbürste bekannt, an deren Schaftende ein kugelförmiges Displayteil aufsteckbar ist, auf dem die mittels Sensoren erfassten Putzergebnisse angezeigt werden oder nach erfolgreichem Putzvorgang ein Spiel für Kinder dargestellt werden kann. Eine interaktive Steuerung des auf dem Display dargestellten Spiels von der Zahnbürste her ist allerdings nicht vorgesehen, vielmehr erfolgt eine Steuerung des auf dem Display dargestellten Programms durch am Displayteil selbst angeordnete Eingabetasten, so dass der Unterhaltungswert und der Lerneffekt begrenzt sind. Das eigentliche Display im Displayteil ist hierbei in die kugelförmige Gestalt des Displayteils eingefügt und mit einer kalottenförmigen, durchsichtigen Abdeckung aus kratz- und säurefestem Kunststoff abgedeckt.

Weitere Zahnputzvorrichtungen mit einem Display, auf dem interaktiv steuerbare Spiele dargestellt werden, zeigen die Schriften US 2008/0141478 und US 2008/0141476, wobei mehrere Zahnbürsten miteinander kommunizieren können, um Spiele wie beispielsweise "Stein, Schere, Blatt" im Wettbewerb gegeneinander spielen zu können. Die Displays sind hierbei jedoch am Handstück der Zahnbürste selbst angebracht, so dass ein das richtige Zähneputzen unterstützendes Spiel während des Putzens nicht gespielt werden kann.

Der vorliegenden Erfindung liegt die Aufgabe zugrunde, ein verbessertes Körperpflegegerät der eingangs genannten Art zu schaffen, das Nachteile des Standes der Technik vermeidet und Letzteren in vorteilhafter Weise weiterbildet. Insbesondere soll eine bessere Anpassung der Displaynutzung an verschiedene Bedürfnisse erreicht und die Interaktion zwischen verschiedenen Gerätebenutzern und der Anzeigevorrichtung erleichtert werden.

Diese Aufgabe wird erfindungsgemäß durch ein Körperpflegegerät gemäß Anspruch 1 gelöst. Bevorzugte Ausgestaltungen der Erfindung sind Gegenstand der abhängigen Ansprüche.

Es wird vorgeschlagen, den Bildschirm der Anzeigevorrichtung nicht nur für die Darstellung bzw. den Ablauf eines Videospiels zu nutzen, sondern darauf auch verschiedene andere Informationen anzuzeigen und dem jeweiligen Gerätebenutzer die Möglichkeit zu geben, zwischen dem Videospiel und der Anzeige der gewünschten Informationen hin und her zu schalten. Derartige Informationen können verschiedener Natur sein, beispielsweise den Ladezustand des Geräts zum Gegenstand haben, die schon erfolgte Putzzeit betreffen oder das verwendete Aufsatzteil anzeigen. Je nach Belieben des jeweiligen Gerätebenutzers kann dieser zwischen verschiedenen Anzeigemodi hin und her schalten und so die Bildschirmdarstellung an seine Bedürfnisse anpassen. Erfindungsgemäß umfasst die Steuervorrichtung einen Spielecontroller zur Steuerung eines Videospiels auf der Anzeigevorrichtung sowie einen Informationscontroller zur Bereitstellung von Informationen auf der Anzeigevorrichtung, wobei eine Umschaltvorrichtung, die durch eine Umschalttaste betätigbar ist, zum Umschalten von der vom Spielecontroller generierten Spielanzeige zu der von dem Informationscontroller generierten Informationsanzeige auf der Anzeigevorrichtung und/oder umgekehrt vorgesehen ist. Die genannten Spiele- und Informationscontroller brauchen hierbei keine separaten Hardwarebausteine sein, sondern können in Form verschiedener Softwaremodule in einem gemeinsamen Microcontroller verwirklicht sein. Statt des Videospiels oder zusätzlich können Informationen und Auswertungen zum Putzverhalten und die aktuelle oder/und vergangene Putzzeiten dargestellt werden. Auch andere Erwachsenen-Funktionen, die sich mehr an einen Erwachsenenzielgruppe bezüglich des Informationsgehalts richten, sind an dieser Anzeigevorrichtung anzeigbar. Eine Erwachsenen - Version sieht alternativ nicht nur eine Umschaltbarkeit vom Spiel zur Information, sondern von einer ersten Anzeige zu einer zweiten Anzeige vor.

Die zusätzlich zu dem Videospiel darstellbaren Informationen können hierbei grundsätzlich verschiedener Natur sein und beispielsweise feste, vorab gespeicherte Informationen betreffend das verwendete Arbeitsgerät oder den aktuellen Wert eines Betriebsparameters wiedergeben. In Weiterbildung der Erfindung können auf der Anzeigevorrichtung auch Auswertungen dargestellt werden, die aus zuvor erfassten Betriebsparametern des Körperpflegegeräts und/oder erfassten Umgebungsparametern generiert werden. In Weiterbildung der Erfindung umfasst die Steuervorrichtung eine Auswerteeinheit zur Auswertung von erfassten Betriebsparametern und/oder erfassten Umgebungsparametern, wobei die Umschaltvorrichtung mit der Auswerteeinheit koppelbar ist derart, dass dem jeweiligen Gerätebediener durch Betätigen der Umschalttaste ein Umschalten von dem Videospiel auf die Auswertedarstellungen ermöglicht wird.

Die Umschalttaste kann hierbei grundsätzlich an verschiedener Stelle angeordnet sein. Um eine einfache Bedienung auch während des Putzens zu ermöglichen und ein Umschalten auch während des Putzens in einfacher Weise zu ermöglichen, ist eine Umschalttaste an dem Pflegewerkzeug vorgesehen, so dass der Gerätebenutzer während des händischen Führens des Pflegewerkzeugs die Bildschirmdarstellung in der gewünschten Weise umschalten kann. Vorteilhafterweise ist die Umschalttaste hierbei an einem Griffabschnitt des Pflegewerkzeugs vorgesehen, insbesondere in einem Bereich, in dem eine Fingerkuppe des Gerätebedieners zu liegen kommt.

Alternativ oder zusätzlich kann eine Umschalttaste auch an der Anzeigevorrichtung selbst vorgesehen sein, so dass direkt an der Anzeigevorrichtung die gewünschte Bildschirmdarstellung aufgerufen werden kann. Dies ist insbesondere von Vorteil in Verbindung mit der zuvor genannten Auswerteeinheit, so dass Betriebsparameterauswertungen nach Beendigung des Putzvorgangs an der Anzeigevorrichtung abrufbar sind. Dies ermöglicht es beispielsweise in einfacher Weise Eltern das Putzverhalten ihrer Kinder zu überwachen, indem die in einem mit der Steuervorrichtung verbundenem Speicher abgelegten Auswertedaten durch Betätigen der Umschalttaste aufgerufen werden.

Alternativ oder zusätzlich kann eine Umschalttaste auch an einer Basisstation vorgesehen sein, an der das Pflegewerkzeug und/oder die Anzeigevorrichtung ablegbar und/oder andockbar und/oder ladbar ist.

Das Umschalten der Bildschirminhalte kann hierbei grundsätzlich in verschiedener Art und Weise erfolgen. Beispielsweise kann eine Überblendung der Bildschirmdarstellungen erfolgen. Alternativ oder zusätzlich kann eine gleichzeitige, verkleinerte Darstellung beider Bildschirmdarstellungen nach Art eines Split Screens erfolgen. In bevorzugter Weiterbildung der Erfindung werden jedoch die jeweils gewünschten Bildschirminhalte vollständig durch einander ersetzt.

In vorteilhafter Weiterbildung der Erfindung kann das Hin- und Herschalten der Bildschirmdarstellungen auch automatisch erfolgen. Eine hierzu vorgesehene Umschaltsteuerung betätigt die Umschalteinrichtung vorteilhafterweise automatisch in Abhängigkeit von einer vorbestimmten Betriebsbedingung des Körperpflegegeräts. Dies kann in einfacher Weiterbildung der Erfindung eine Zeitsteuerung beinhalten, beispielsweise dahingehend, dass nach Ablauf einer vorbestimmten Zeitspanne beispielsweise beginnend mit dem Start eines Spiels die Bildschirmdarstellung automatisch auf dem Informationsschirm umgeschalten wird. Alternativ oder zusätzlich kann die Umschaltung auf den Informationsbildschirm in Abhängigkeit eines vorbestimmten Spielereignisses des von dem Spielecontroller gesteuerten Videospiels erfolgen, beispielsweise dahingehend, dass erst nach erfolgreicher Beendigung des Spiels eine Datenauswertung betreffend dem Putzvorgang dargestellt wird.

Alternativ oder zusätzlich kann die Umschaltvorrichtung eine Informationsdarstellung auch dann einblenden, wenn von einer Auswerteeinheit der Steuervorrichtung eine falsche oder nicht perfekte Anwendung des Pflegegeräts erkannt und ausgewertet wird. Beispielsweise kann eine Anleitungs-Darstellung anstelle Videospiels eingeblendet werden, wenn mit zu hohem Anputzdruck in falschen Putzbewegungen ein Zahnputzvorgang ausgeführt wird.

Alternativ oder zusätzlich kann die Einblendung eine solche Anleitung auch in Form einer Veränderung des Videospielinhalts erfolgen, beispielsweise dahingehend, dass die Gestik und Mimik eines animierten Charakters verändert wird, ein zu pflegendes Körperteil verfärbt wird oder in die Darstellung des Videospiels spezielle Piktogramme beispielsweise in Form eines Stoppschildes, eines durchgestrichenen Pfeils oder dergleichen eingeblendet wird.

Die manuelle Betätigung der Umschalteinrichtung kann grundsätzlich verschieden erfolgen. In Weiterbildung der Erfindung kann die hierfür vorgesehene Eingabevorrichtung eine Betätigungstaste zum Betätigen der Umschalteinrichtung durch Tastendruck, -berührung und/oder -annäherung aufweisen. Insbesondere kann hierbei eine mechanische Drucktaste und/oder eine graphische Touchscreen-Taste Verwendung finden.

Alternativ oder zusätzlich zu einer taktil arbeitenden Betätigungstaste kann die Eingabevorrichtung auch berührungslos arbeitend ausgebildet sein, vorzugsweise einen Bewegungssensor zur Erfassung einer Körpergliedbewegung aufweisen.

In Weiterbildung der Erfindung kann die Umschalttaste verschiedene Betätigungsmodi zum Betätigen der Umschaltvorrichtung in verschiedene Schaltrichtungen und/oder verschiedenen Schaltarten. Insbesondere kann die Umschalttaste in verschiedener Weise betätigt werden, um verschiedene Umschaltvorgänge auszulösen. Beispielsweise kann bei einem einfachen Betätigen der Umschalttaste in einer Reihe von verschiedenen Bildschirmdarstellungen immer auf die nächste Bildschirmdarstellung weitergeschaltet werden. Umgekehrt kann beispielsweise durch eine Doppel- bzw. Zweifachbetätigung der Umschalttaste in der genannten Reihe von Bildschirmdarstellungen rückwärts geschalten werden. Alternativ oder zusätzlich kann durch eine langanhaltende Betätigung der Umschalttaste eine Hauptdarstellung, insbesondere die Darstellung des Videospiels, auf dem Bildschirm geschalten werden.

Um eine bessere Anpassung der auf der Anzeigevorrichtung angezeigten Darstellungen an den jeweiligen Gerätebediener zu ermöglichen, insbesondere das darauf ablaufende Spiel an den jeweiligen Benutzer anpassen zu können, kann nach einer vorteilhaften Weiterbildung der Erfindung eine Auswahlvorrichtung zur Auswahl mehrerer Spiele zur Anzeige auf der Anzeigevorrichtung vorgesehen sein, so dass das jeweils für den Gerätebenutzer passende Spiel dargestellt werden kann. Hierzu können in einer Speichereinrichtung mehrere Spiele und zugehörige Darstellungsdaten gespeichert sein, die von dem Spielecontroller nach Auswahl durch die Auswahlvorrichtung entsprechend auf die Anzeigevorrichtung gebracht und gesteuert werden. Beispielsweise kann für ein Kleinkind ein einfacheres Spiel ausgewählt werden als wie für ein schon älteres Kind.

Alternativ oder zusätzlich kann das Körperpflegegerät hierbei einen Wechselspeicher und/oder eine Schnittstelle zum Einlegen verschiedener Speichermedien mit unterschiedlichen Spielen enthalten, so dass die Auswahl durch verschiedene Speichermedien erfolgen kann. Der Speicher und/oder die Speicherschnittstelle kann hierbei grundsätzlich an verschiedener Stelle vorgesehen sein, beispielsweise unmittelbar an der Anzeigevorrichtung positioniert sein. Alternativ oder zusätzlich kann eine Schnittstelle zum Einspielen neuer Spielesoftware und/oder Herunterladden der Software vorgegeben sein.

In alternativer Weiterbildung der Erfindung kann eine einfache Individualisierung des auf der Anzeigevorrichtung dargestellten Spiels auch dadurch erfolgen, dass das jeweilige Speichermedium einem Aufsatzteil zugeordnet ist, das auf ein Handteil des Pflegewerkzeugs aufsetzbar und/oder an dieses andockbar ist. Beispielsweise kann auf dem Aufsatzteil ein RFID-Chip vorhanden sein, der entsprechende Spielinformationen speichert und die von dem Handteil des Pflegewerkzeugs aufgerufen und auf den Spielecontroller übertragen werden, der dann die entsprechenden Spielinformationen auf der Anzeigevorrichtung zur Darstellung bringt. Alternativ oder zusätzlich kann an dem genannten Aufsatzteil auch nur ein Identifikationscode gespeichert sein, mit dem zusammen verknüpft entsprechende Spielinformationen an anderer Stelle in einem Speicher abgelegt sind, so dass durch Abfragen des Identifikationscodes des jeweils angedockten Aufsatzteils an anderer Stelle die dazu gespeicherten Spieleinformationen aufrufbar sind.

In vorteilhafter Weiterbildung der Erfindung kann hierbei die Adressierung der abgespeicherten Daten programmierbar sein, so dass von einem Gerätebenutzer festgelegt werden kann, welcher Datensatz bei Identifizierung eines bestimmten Aufsatzteils auf der Anzeigevorrichtung zur Anzeige gebracht wird.

Um eine noch weitergehende Individualisierung der Bildschirmdarstellungen zu ermöglichen, ist nach einem weiteren Aspekt der vorliegenden Erfindung nicht nur eine Auswahl zwischen vorab konfigurierten Bildschirmdarstellungen möglich, sondern eine Modifizierung, Abänderung und/oder Generierung von Bildschirmdarstellungen ermöglicht. Erfindungsgemäß ist vorgesehen, dass die gespeicherten Darstellungen zur Anzeige auf der Anzeigevorrichtung mittels einer an dem Körperpflegegerät vorgesehenen Eingabevorrichtung individuell abänderbar und/oder gestaltbar ausgebildet und in dem Speicherbaustein mit einem Individualcode verknüpft abspeicherbar sind. Die individuelle Programmierbarkeit der Darstellungen über die Auswahl vorgespeicherter Varianten hinaus erlaubt eine vielfältige Anpassung der Nutzung der Anzeigevorrichtung an unterschiedliche Bedürfnisse. Die Abänderbarkeit der Darstellungen kann hierbei grundsätzlich verschieden ausgebildet sein. Beispielsweise können gespeicherte Darstellungen jeweils einen unveränderbaren Grundabschnitt und zumindest einen ergänzbaren Einfügeabschnitt zur Ergänzung der gespeicherten Darstellung durch eine individuell gestaltete Darstellung aufweisen. Beispielsweise können in den gespeicherten Darstellungen Namensfenster individuell programmierbar sein, beispielsweise einem animierten Avatar durch einen speziellen Namen zu kennzeichnen, der dann zusammen mit dem Avatar auf der Anzeigevorrichtung dargestellt wird. Dies ermöglicht es beispielsweise individuell gekennzeichnete Figuren in Videospielen zu generieren.

Die genannte Eingabevorrichtung zur individuellen Abänderung und/oder Gestaltung der Darstellungen kann hierbei grundsätzlich verschieden ausgebildet sein. Beispielsweise kann ein Touchscreen zur Eingabe der individuellen Abänderungen und/oder Gestaltungen vorgesehen sein, wobei insbesondere die Anzeigevorrichtung selbst ein Anzeigeelement in Form eines solchen Touchscreens aufweisen kann, so dass individuell an den Darstellungen Änderungen vorgenommen werden können.

Alternativ oder zusätzlich kann eine Eingabevorrichtung in Form einer Programmiersteuertaste vorzugsweise in Form einer Cursor-Steuertaste zum Anklicken von Display-Schaltflächen und/oder Eingabebefehlen vorgesehen sein, wobei eine solche Programmier-steuertaste an der Anzeigevorrichtung und/oder einer Basisstation vorgesehen sein kann. Vorteilhafterweise kann eine solche Programmiersteuertaste auch an dem Pflegewerkzeug vorgesehen sein, so dass von dem Pflegewerkzeug her die Darstellungen auf der Anzeigevorrichtung individuell und/oder gestaltet werden können.

In Weiterbildung der Erfindung kann eine solche Steuertaste insbesondere dann, wenn sie an dem Pflegewerkzeug vorgesehen ist, in Abhängigkeit in der auf dem Bildschirm dargestellten Darstellung veränderbar belegt sein, vorzugsweise derart, dass die Steuertaste bei Ablauf eines Videospiels auf der Anzeigevorrichtung eine Steuertaste zur Steuerung des Videospiels, insbesondere eine Navigationstaste zum Navigieren eines virtuellen Bildschirmelements und/oder eines Avatars über die Anzeigevorrichtung und/oder über das darauf dargestellte Hintergrundbild hin bildet. Wird andererseits anstelle eines solchen Videospiels auf der Anzeigevorrichtung ein Konfigurationsmenü dargestellt, kann die genannte Steuertaste an dem Pflegegerät eine Navigationstaste zur Steuerung durch das Menü bilden, dass beispielsweise das Anklicken verschiedener Menüflächen gestattet. Die Steuertaste am Pflegewerkzeug besitzt daher vorteilhafterweise eine Doppel- oder Mehrfachfunktion.

In Weiterbildung der Erfindung sind die individuell abgeänderten und/oder generierten Darstellungen und/oder Informationen individuell speicherbar, vorzugsweise zusammen mit einem ein jeweiliges Aufsatzteil des Pflegwerkzeugs identifizierenden Code und/oder in einem an dem Aufsatzteil vorgesehenen Speicherbaustein, so dass bei Aufsetzen des jeweiligen Aufsatzteils die individuell generierten Daten aufgerufen und zur Anzeige auf dem Bildschirm der Anzeigevorrichtung gebracht werden können.

Vorteilhafterweise ist die Anzeigevorrichtung trotz ihrer Steuerbarkeit von dem Pflegewerkzeug her weder fest an einer Basisstation noch fest am Pflegewerkzeug angeordnet, sondern sozusagen frei platzierbar, so dass es an der jeweils günstigsten Stelle abgestellt werden kann. In Weiterbildung der Erfindung bildet die Anzeigevorrichtung einen von der Basisstation und dem Pflegewerkzeug separat ausgebildeten und separat positionierbaren Baustein, der eine Kommunikationsschnittstelle zur Kommunikation mit der Basisstation und/oder mit dem Pflegewerkzeug auch im separaten Zustand aufweist. Durch Ausbildung der Anzeigevorrichtung als Stand-alone-Modul kann die Anzeigevorrichtung unabhängig von der Position der Basisstation an den für ein Kind oder auch einen Erwachsenen gut einsehbaren Platz positioniert werden, so dass die Sichtbarkeit auch beim bestimmungsgemäßen Hin- und Herbewegen des Pflegewerkzeugs - im Falle einer Zahnbürste entsprechend den Putzbewegungen im Mund - gut einsehbar ist. Trotzdem kann die Bildschirmdarstellung vorzugsweise in Form eines Videospiels interaktiv von dem Pflegewerkzeug her über die Kommunikationsschnittstelle des Displays gesteuert werden. Hierzu kann das Pflegewerkzeug eine Kommunikationsverbindung direkt zu dem Anzeigebaustein besitzen oder damit indirekt über die Basisstation kommunizieren.

Um trotz beliebiger Platzierbarkeit der Anzeigevorrichtung ohne von der Basisstation abhängigen Aktionsradius eine einfache und effiziente Energieversorgung der Anzeigevorrichtung zu erzielen, ist in vorteilhafter Weiterbildung der Erfindung die Anzeigevorrichtung mit einem ladbaren Energiespeicher versehen, der durch Andocken der Anzeigevorrichtung an die Basisstation ladbar ist.

In Weiterbildung der Erfindung sind sowohl die Anzeigevorrichtung als auch das Pflegewerkzeug an der Basisstation aufladbar.

Die Anzeigevorrichtung besitzt in Weiterbildung der Erfindung einerseits Aufstandsmittel zum Abstellen auf einer ebenen Fläche sowie andererseits an die Basisstation formangepasste Lagermittel zur passgenauen Lagerung des Displays an der Basisstation. Über die genannten formangepassten Lagermittel kann die Anzeigevorrichtung vorteilhafterweise formschlüssig an die Basisstation angedockt werden. In Weiterbildung der Erfindung können hierbei die zuvor genannten Aufstandsmittel zum Abstellen auf einer ebenen Fläche und die Lagermittel zum Andocken an die Basisstation ineinander integriert sein und/oder gegenseitig ergänzend ausgebildet sein. Beispielsweise können vorspringende Abstellfüße in dazu komplementär ausgebildete Aufnahmemulden an der Basisstation eingesetzt werden.

Um die Sendeleistungen niedrig halten zu können und keinen großen Datenverkehr zu erfordern, kann in vorteilhafter Weiterbildung der Erfindung ein Spielecontroller zur Steuerung eines an der Anzeigevorrichtung anzeigbaren Videospiels in die Anzeigevorrichtung integriert sein, so dass über die Kommunikationsschnittstelle lediglich Steuerbefehle zum interaktiven Steuern des Spiels übertragen werden müssen. Die übertragenen Steuerbefehle, die von dem Pflegewerkzeug her kommen, werden durch den Spielecontroller unmittelbar an der Anzeigevorrichtung verarbeitet, auch wenn diese von der Basisstation entfernt angebracht ist.

In alternativer Weiterbildung der Erfindung kann jedoch auch vorgesehen sein, dass die Basisstation und/oder auch das Pflegewerkzeug einen Spielecontroller enthält, der zumindest einen Teil der an dem Pflegewerkzeug erzeugten Steuerbefehle abarbeitet und in Grafikbefehle transformiert, die direkt oder mittelbar über die Basisstation auf die Anzeigevorrichtung übertragen werden.

Die auf dem Display der Anzeigevorrichtung darstellbaren Spiele können hierbei grundsätzlich unterschiedlich ausgebildet sein. Insbesondere können Spiele mit steuerbaren Avataren Verwendung finden, die von dem Pflegegerät her interaktiv insbesondere hinsichtlich ihrer Bewegungen gesteuert werden können. Grundsätzlich können hierbei verschiedene Funktionen und Darstellungsmodi veränderbar ausgebildet sein. Nach einer vorteilhaften Weiterbildung der Erfindung können an dem Pflegewerkzeug Navigationssteuermittel angebracht sein, mittels derer ein Avatar auf dem Display der Anzeigevorrichtung navigiert und über den Bildschirm bzw. den dort dargestellten Hintergrund geführt werden kann. Die Navigationssteuermittel können hierbei in Form eines händisch zu betätigenden Schaltmittels am Pflegegerät ausgebildet sein, und/oder Erfassungsmittel zur Erfassung eines Betriebsparameters des Pflegewerkzeugs umfassen, in Abhängigkeit dessen der Avatar auf dem Display navigiert wird. Beispielsweise kann in das Pflegewerkzeug ein Bewegungssensor, ein Neigungssensor und/oder ein Beschleunigungssensor eingebaut sein, dessen Signal in ein Navigationssignal für den Avatar des auf der Anzeigevorrichtung dargestellten Spiels transformiert wird. Vorzugsweise werden die Navigationssteuersignale - wie auch immer erzeugt - synchron in Bewegungen des virtuellen Bildelements bzw. Avatars umgesetzt, um den Lerneffekt zu erhöhen und den Spielanreiz zu verstärken.

Zusätzlich zu der genannten separat ausgebildeten Anzeigevorrichtung kann das Pflegewerkzeug eine am Pflegewerkzeug selbst angebrachte Anzeigevorrichtung umfassen, beispielsweise um ergänzend zu der separat ausgebildeten Anzeigevorrichtung auf besondere Ereignisse hinzuweisen oder andere Informationen zu transportieren. In Weiterbildung der Erfindung kann das Pflegewerkzeug eine Anzeige umfassen, die von einer Steuervorrichtung in Abhängigkeit des Spieleablaufs auf der separaten Anzeigevorrichtung und/oder in Abhängigkeit eines Betriebsparameters des Pflegewerkzeugs selbst steuerbar ist. Beispielsweise kann die am Pflegewerkzeug selbst vorgesehene Anzeige dazu genutzt werden, um auf besonders interessante oder wichtige Spielsituationen an der separaten Anzeigevorrichtung hinzuweisen.

Die werkzeugseitige Anzeigevorrichtung kann grundsätzlich verschieden ausgebildet sein, wobei in Weiterbildung der Erfindung am Pflegewerkzeug selbst einfachere Anzeigemittel als an der separaten Anzeigevorrichtung vorgesehen sind. In vorteilhafter Weiterbildung der Erfindung kann das Pflegewerkzeug einen beleuchtbaren Gehäuseabschnitt aufweisen und/oder ein auf das Werkzeuggehäuse aufsetzbares Leuchtelement umfassen. Bei einem Pflegewerkzeug in Form einer Zahnbürste kann in Weiterbildung der Erfindung ein Leuchtring am stirnseitigen Ende des Handstücks vorgesehen sein, das in verschiedene Leuchtzustände wie beispielsweise ein Blinken und/oder in unterschiedliche Farben bringbar ist.

Wird die werkzeugseitige Anzeige in Weiterbildung der Erfindung in Abhängigkeit des Spielablaufs auf der separaten Anzeigevorrichtung gesteuert, kann beispielsweise dann, wenn das Spiel auf der separaten Anzeigevorrichtung einen Steuerbefehl als Eingabe erwartet oder benötigt, ein Signal auf der werkzeugseitigen Anzeige beispielsweise in Form eines Aufblinkens gegeben werden.

Das Anzeigeelement der separaten Anzeigevorrichtung ist vorteilhafterweise indes komplexer ausgebildet. Insbesondere ist ein elektronisches Anzeigepaneel beispielsweise in Form eines LCD-Bildschirms vorgesehen.

Nach einem weiteren vorteilhaften Aspekt der vorliegenden Erfindung kann die Anzeigevorrichtung auch einen elektronischen Bilderrahmen bilden, in den von einer anschließbaren Bilderquelle unabhängig von der Zahnputzvorrichtung Bilder einspielbar und anzeigbar sind. Vorteilhafterweise kann ein Umschalten mittels der genannten Umschalttaste bewerkstelligt werden, insbesondere von dem Pflegewerkzeug her.

Zähneputzen ist im Allgemeinen eine zwar notwendige, aber nicht bei allen Menschen gleich beliebte Tätigkeit. Vor allem bei Kindern ist die Motivation zum Zähneputzen nicht immer vorhanden. Um diesem entgegenzuwirken kann mit der oben genannten Erfindung die Zeit während des Zähneputzens interessant gestaltet werden um somit eine zeitlich längere und regelmäßigere Zahnhygiene zu erlernen und beizubehalten. Dies kann sich positiv auf die Zahngesundheit auswirken.

Bei der Erfindung handelt es sich bevorzugt um eine elektrische Zahnbürste welche interaktiv ein externes Display steuert. Auf diesem Display ist verschiedene Art von Information verfügbar, Details werden in den folgenden Punkten erläutert.

Bei der Erfindung handelt es sich um eine Zahnbürste, die zusätzlich zu Funktionsschaltern wie Einschalter, Mode-Wahlschalter, etc. einen Schalter vorsieht, mit dem während des Putzens eine Interaktion ausgeführt werden kann.

Der Actionknopf am Handstück greift nicht in die primäre Funktion des Gerätes (Putzen) ein, sondern bietet die Möglichkeit während des Putzens verschiedene Funktionalitäten zu steuern. Es kann beispielsweise ein Spiel sein oder auch zur Bereitstellung gewisser Informationen während des Putzens dienen (Putzstatistik, Umschaltung von Andruckkontrolle auf Putzzeit, auf Ladezustand, etc...).

Der Interaktionsschalter kann beispielsweise auf der Rückseite der Zahnbürste oder auch an anderer Stelle platziert sein.

Mit dem Statistik Abfrage Schalter ist eine Statistik-Abfrage möglich. Statistikabfrage kann die Bereitstellung folgender Informationen bedeuten: Putzdauer, Putzzeit (morgens-mittagsabends), Andruckkraft, Putzbewegungen, Putzpositionen, etc. Diese Informationen werden benutzerspezifisch erfasst, ausgewertet, gespeichert und angezeigt. Die Benutzererkennung erfolgt über die Aufsteckbürste über bekannte Maßnahmen.

Der "Status-Schalter" befindet sich bevorzugt auf der Ladestation oder auf dem Display. Gegebenenfalls kann er sich auch auf der Zahnbürste befinden.

Am Beispiel einer Kinderzahnbürste können die Eltern per Knopfdruck des Kindes Putzdauer und Putzzeiten der letzten 5 Tage kontrollieren.

Es wird eine Einrichtung vorgesehen zur Erkennung von Zustandswechslen und des Energiesparmodes, welche die Funktionen der Zahnbürste, Display, etc. erst aktiviert wenn der Benutzer Gebrauch vom Gerät macht. Dadurch kann Energie gespart werden, Akkulaufzeiten vergrößert, Das Abnehmen der Zahnbürste von der Ladestation wird folgendermaßen detektiert und ausgewertet. Folgender Ablauf ist dabei möglich: Abheben von der Ladestation: Erzeugt einen Spannungsabfall in der Ladespule; Das Lademanagement/Controller detektiert diesen Zustand und wertet ihn aus. Ansteuerung der benötigten Funktionen: z.B. drahtlose Protokollübertragung zum Display; Ausführung der Funktionen: z.B.: Display schaltet sich ein, Begrüßung.

Diese Aktivierungserkennung kann auch zur Bereitstellung von Informationen verwendet werden, wie z.B. Begrüßung, Ansage der Uhrzeit, etc.

In einer weiteren Variante erfolgt die Navigation auf dem Display während einer Animation oder Navigation innerhalb eines Menüs.
1. Die Navigation wird bevorzugt durch einen mechanisch betätigten Navigationsknopf realisiert. Dieser Knopf ist für jede Richtung (4 Richtungen: oben, unten, rechts, links) im Gerät mit jeweils einem Taster hinterlegt welcher die jeweils betätigte Richtung registriert.
2. Die Navigation erfolgt über die Richtungs- bzw. Bewegungserkennung mittels Beschleunigungs- und Lagesensoren im Handstück

Gemäß einer weiteren Variante ist die Darstellung der Animation abhängig vom Putzverhalten. Bei dem folgenden Punkt handelt es sich im Allgemeinen um Pixelverschiebungen auf dem Display abhängig vom erfassten Zustand der Bürste. In der Bürste befindet sich ein Sensor der die Bewegungen der Bürste erfasst. Dies kann ein Beschleunigungssensor sein. Ebenso sind optische Mittel denkbar, um die Position der Bürste in Relation zum Gesicht zu erfassen. Die Daten über die Bewegung werden erfasst und an die Displayeinheit übermittelt. Die in der Displayeinheit animierte Figur wird in Abhängigkeit von der Putzbewegung, bevorzugt synchron, gesteuert. Besonders für Kinder ist dies vorteilhaft, weil sie damit sofort sehen, welche Putzbewegung sie ausführen und erhalten eine sofortige Rückmeldung. Dies wirkt sich positiv auf die Putzmotivation aus. So kann die animierte Figur bei einer Bewegung nach links sich ebenfalls nach links bewegen und für die Bewegung nach rechts und oben und unten analog.

Wird die Zahnbürste zu einem neuen Zahn geführt so springt auch die animierte Figur auch zu einem neuen Zahn. Dadurch kann der Benutzer von Zahn zu Zahn geführt werden und vergisst weniger häufig einzelne Zähne oder Stelle zu putzen. Dies kann durch eine Änderung der Farbe oder des Glanzes des symbolisiert dargestellten Zahnes erfolgen. Nur wenn der Benutzer eine ausreichend lange Zeit auf dem Zahn geputzt hat, ändert der Zahn seine Farbe von zum Beispiel beige nach weiß.

Gleiches kann mit anderen Parametern als die Position und Bewegung der der Bürste ausgeführt werden. So kann die Animation durch den Andruck der Bürste gesteuert sein. Im Speziellen kann somit eine Spielfigur innerhalb der Animation/ eines Spiels durch Putzen mit der richtigen Andruckkraft bewegt werden. Wird der richtige und empfohlene Andruck verwendet, so bewegt sich die animierte Figur normal über den Zahn und von Zahn zu Zahn. Ist der Andruck zu hoch oder zu niedrig so verändert sich die animierte Figur in ihren Bewegungen oder in ihrer Farbe. So kann bei zu hohem Andruck z.B. sich die Farbe auf rot verändern. Andere optische oder akustische Signale sind ebenso denkbar. So kann eine vordefiniertes akustisches Signal oder eine gespeichertes Signal wiedergegeben werden. So kann man eine Melodie, eine Stimme, Töne oder sonstige akustische Rückmeldungen aufnehmen und wiedergeben.

Die Steuerung der Bürste kann auch von einem Sensor gesteuert werden, der die Oberfläche des Zahnes erfasst und nicht geputzte Stellen erfasst. Solange der Zahn nicht ausreichend gereinigt wurde, wird keine Empfehlung gegeben, zum nächsten Zahn zu wechseln. Wird trotzdem gewechselt, kann eine Warnung oder ein Hinweis ausgelöst werden.
Bsp1 Kinder: Ein Ball soll auf einer Wippe gehalten werden. Bei zu starkem Andrücken rollt er nach rechts und bei zu geringer Andruckkraft nach links.
Bsp2.: Ein Surfer soll oben auf einer Welle gehalten werden, wird zu stark gedrückt fällt er von der Welle, drückt man zu leicht kommt er nicht auf die Welle drauf.
Bsp3 Erwachsene: Display mit verschiedenen Farben.

In einer Variante ist folgender Lernmodus vorgesehen.
Werden von der Einheit falsche oder ungünstige Putzbewegungen erkannt so kann dies dem Benutzer mitgeteilt werden. Dies kann optisch über das Display erfolgen durch:
- Text, der eingeblendet wird,
- Durch Gestig/Mimik des animierten Charakters
- Durch Verfärbung des Zahnes
- Durch akustische Signale wie Piepen oder Sprache
- Durch Leuchtdioden oder spezielle Symbole auf dem Display (Stoppschild, durchgestrichener Pfeil., etc.)

Eine andere Erweiterung der Erfindung ist eine Anleitung zum richtigen Putzen. Das kann zum Beispiel spezielle Lernmoden sein, eine Kombination von Lernmode und Putzmode oder nur bei deutlich falscher Benutzung während des Putzens ausgelöst werden.

Im Lernmode wird die richtige Putzbewegung dargestellt und der Benutzer kann das sofort nachvollziehen. Werden zum Beispiel kreisende Bewegungen empfohlen, so kann auf dem Display ein Pfeil, der einen Kreis beschreibt, zu sehen sein. Eine zweite, andersfarbige Linie zeigt die momentane Position der Zahnbürste an und so kann man versuchen, beide Linien zur Deckung zu bringen. Ist ein Drucksensor montiert kann auch der Benutzer auch über den empfohlenen Andruck und über den aktuellen Andruck informiert werden. Hier kann wieder die Abweichung grafisch und farbig illustriert werden.

In einer Variante sind die Spielinhalte, Animationen, Informationen, Programmierung auswechselbar ausgebildet. Durch die Verwendung von verschiedene individuell erkennbare Ersatzbürsten (Refill) können verschiedene Spiel- Animations- Informations - Inhalte übertragen oder initialisiert werden. Die Bürste erkennt das Refill, welches codiert ist. Anhand des Codes wird festgestellt, um welches Refill es sich handelt. So kann es eine Ersatzbürste sein für Kinder, für Erwachsenen, zum Polieren der Zähne oder für spezielle Interdentalreinigung. Je nach Funktion werden verschieden Animationen gestartet. Eine andere Möglichkeit ist die Personalisierung von Refills. In einem Set-Mode wird für dieses Refill eine Animation festgelegt. Dies kann über Tasten an der Zahnbürste, an dem Display oder durch einen Touchscreen erfolgen. Ist der entsprechende Mode gespeichert wird ist beim Einschalten oder Abnehmen von der Ladestation automatisch diese Animation gestartet, wenn dieses Refill aufgesteckt ist

Eine andere Ausführung ist die Möglichkeit die Animation durch auswechselbare Speichermedien mit Programmen (Software) zu ändern. So gibt es verschieden Charaktere und Ausbaustufen und Lern- und Auswertemöglichkeiten. Jeder kann die zu ihm passende Ausbaustufe und Animation finden und verwenden. Regelmäßige Updates erhalten die Spannung und den Spaß beim Putzen.

Spiele für Erwachsene, Quiz, Puzzle, Kreuzworträtsel, etc., Lernprogramme wie zum Beispiel ein Vokabeltrainer können an der Anzeigevorrichtung anzeigbar sein.

Weiterhin ist gemäß einer Variante ein Belohnungs- und Punktesystem bei regelmäßigem Putzen mit ggf Statistikauswertung vorgesehen. Die Putzparameter der verschiedenen Familienmitglieder werden aufgezeichnet, statistisch ausgewertet und können grafisch dargestellt werden. Über eine geeignete Schnittstelle (USB) können die Daten auch an einen Computer übermittelt werden. Die Darstellung wird ausgelöst durch den Status-Knopf.
Eine weitere Ausführung und Verbesserung ist, wenn durch das Putzverhalten, abhängig von Putzdauer, Putzzeit, Regelmäßigkeit, richtige Putzparameter, etc. Punkte gesammelt werden können. Mit diesem Punktesystem kann zu einem Wettbewerb zwischen Kindern, bzw. zwischen Kindern und Eltern animiert werden, der letztendlich in einer gründlichen und ausführlichen Zahnhygiene resultieren kann.

Dies ergibt einen Highscore für Familienmitglieder. Über einen PC oder Tasten oder einen Touchscreen Display lassen sich zu den einzelnen Refills Namen hinterlegen und am Bildschirm anzeigen. Auch das Einspielen von digitalen Bildern ist denkbar.

Das Zusammenspiel aller Putzparameter wird mit einem Code hinterlegt, der im Internet auf einer Homepage eingegeben werden kann um somit mit anderen Kindern, bzw. Erwachsenen einen Wettbewerb aufnehmen zu können.

In einer weiteren Ausführungsform kommunizieren die Handstücke nicht nur mit der anzeige und Auswerteinheit, sondern auch untereinander. Dies hat den Vorteil, dass sich Putzprogramme von Handstück zu Handstück übertragen lassen.

Weitere Varianten betreffen eine Methode um die Motivation beim Zähneputzen zu verbessern oder das Putzverhalten/Putzergebnis zu verbessern welche umfasst
- Das Handstück einer elektrische Zahnbürste
- Optional ein oder mehreren Sensoren die die aktuellen Putzparameter erfassen im Handstück
- Eine Basis oder Ladestation
- Eine von Handstück und Basiseinheit separate Displayeinheit
- Eine kabellose Datenübertragung vom Handstück zum Display und/oder der Basisstation.
- Optional Touchscreen für die Programmierung der Betriebszustände
- Optional personalisierte Refills durch RFID.
- Ein animierter Charakter oder Grafik darstellbar auf dem Display
- Interaktives Feedback des Charakters während des Putzens
- Optional austauschbare Software und Charaktere
- Wobei der Charakter animiert wird durch
- Aktionen des Benutzers oder
- Von den Putzparameter interaktiv verändert wird
- wobei der Benutzer ein sofortiges Feedback aus seinen Aktionen bekommt.

Diese Erfindung kann auch bei Rasierapparaten angewendet werden.

Diese und weitere Merkmale gehen außer aus den Ansprüchen auch aus den Zeichnungen und der nachfolgenden Beschreibung hervor, mittels derer anhand der Zeichnungen bevorzugte Ausführungen der Erfindung erläutert werden, wobei die Merkmale für sich oder in Unterkombination unabhängig von ihrer Zusammenfassung in den Ansprüchen den Gegenstand der vorliegenden Erfindung bilden können. In den Zeichnungen zeigen:
- Fig. 1:: eine schematische Darstellung eines Körperpflegegeräts in Form einer Zahn- putzvorrichtung, die eine Zahnbürste sowie eine Anzeigevorrichtung zur Anzeige eines interaktiv steuerbaren Zahnputzspiels umfasst, die beide auf einer Basis- station geladen werden können,
- Fig. 2:: eine schematische Darstellung des Ablaufs des interaktiv steuerbaren Zahnputz- spiels auf dem Bildschirm der Anzeigevorrichtung, wobei die genannte Anzeige- vorrichtung in mehreren Darstellungen zu verschiedenen Zeitpunkten des Spiels dargestellt ist,
- Fig. 3:: eine schematische Ansicht der auf der Basisstation abgestellten Zahnbürste, die deren Verwippbarkeit auf der Basisstation zur Verdeutlichung der magnetisch arbeitenden Haltemittel zeigt,
- Fig. 4:: eine ausschnittsweise Darstellung eines händisch betätigbaren Navigations- schalters an der Zahnbürste zur Steuerung des Avatars des interaktiv steuerba- ren Spiels,
- Fig. 5:: eine schematische Ansicht einer Umschalttaste an der Anzeigevorrichtung zur Umschaltung des Bildschirminhalts,
- Fig. 6:: eine schematische, ausschnittsweise Darstellung von Bildschirmsteuertasten an dem Handteil des Pflegewerkzeugs in Form einer Zahnbürste,
- Fig. 7:: ein Ablaufdiagramm für die Ausführungsform mit Action-Taster
- Fig. 8:: ein Ablaufdiagramm für die Steuerung mit Sensoren und Trainingsmode,
- Fig. 9:: ein Ablaufdiagramm für das Einstellen einer Animation,
- Fig 10.: 1 bis 10.3: Ablaufdiagramme des Abschnittes A ohne Feedback oder Trainingsmo- dus und
- Fig. 11:: ein weiteres Ablaufdiagramm.

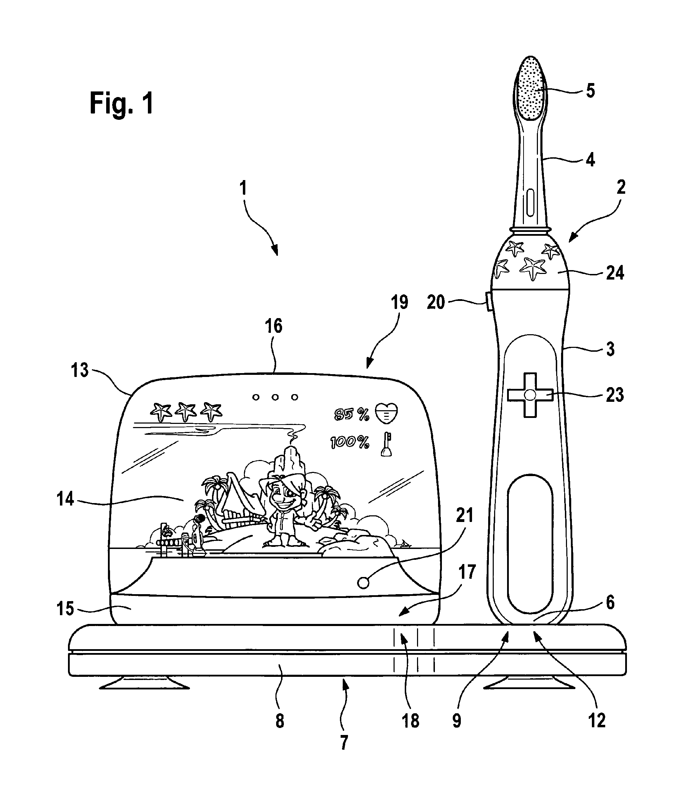

Die in Fig. 1 gezeigte Zahnputzvorrichtung 1 umfasst eine elektrische Zahnbürste 2, die ein ein Griffstück bildendes Handteil 3 sowie ein daran lösbar befestigtes Aufsatzteil 4 umfasst, das in der gezeichneten Ausführungsform eine Aufsatzbürste mit einem Borstenfeld 5 ist, ggf. aber auch andere Reinigungselemente wie Kunststoffstreifen, Interdentalreiniger oder dergleichen aufweisen kann.

Im Inneren des Handteils 3 ist ein Antriebsmotor untergebracht, der über einen geeignet ausgebildeten Antriebsstrang das Borstenfeld 5 des Aufsatzteils 4 antreiben kann. Weiterhin ist im Inneren des Handteils 3 ein Energiespeicher in Form eines Akkus vorgesehen, der über einen Ladeanschluss 6 ladbar ist. Der genannte Ladeanschluss 6 befindet sich vorteilhafterweise an einem hinteren Endabschnitt des Handteils 3, mit dem dieser auf einer Basisstation 7 abgelegt bzw. abgestellt werden kann, um einerseits im Nichtbetrieb aufgeräumt zu sein und andererseits geladen werden zu können.

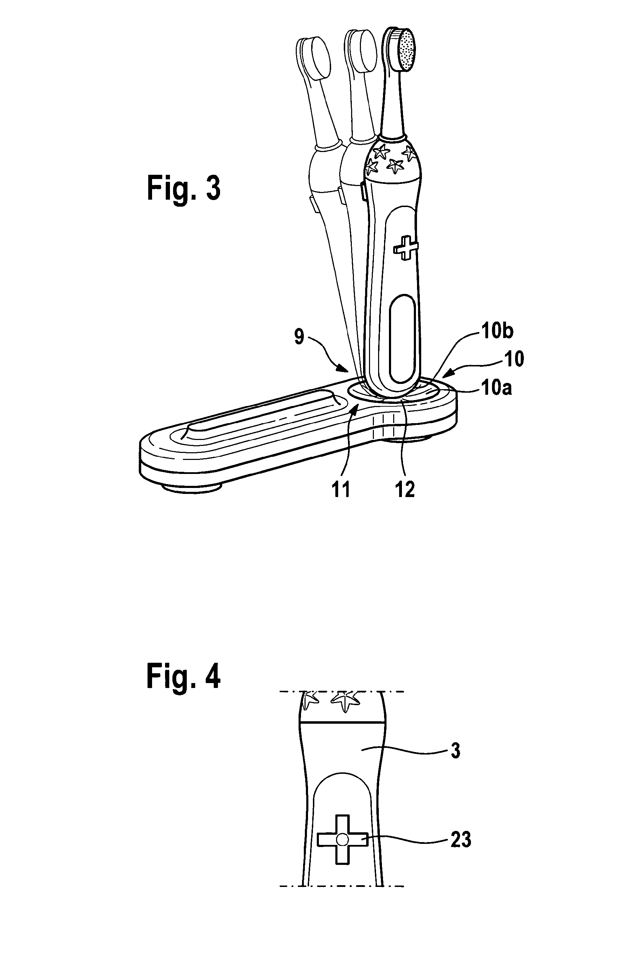

Wie Fig. 3 zeigt, steht die Zahnbürste 3 aufrecht auf dem im Wesentlichen nach Art einer flachen Platte ausgebildeten Stationskorpus 8 der Basisstation 7, wobei nach einer vorteilhaften Ausführung der Erfindung der aufrechte Stand ohne einen verriegelnden Formschluss oder dergleichen erzielt wird, so dass die aufrecht stehende Zahnbürste 2 hin und her wippen kann, wie dies Fig. 3 verdeutlicht.

Hierzu sind einerseits als Lagermittel 9 ein formangepasstes Lagerflächenpaar 10 vorgesehen, die ein jeweils mehrachsig gekrümmtes Wippflächenpaar bilden, dessen Flächenstücke sich aneinander anschmiegen. Konkret ist in der gezeichneten Ausführungsform die Lagerfläche 10a des Stationskorpus 8 in Form einer rotationssymmetrischen Mulde ausgebildet, während das stirnseitige Ende des Handteils 3 der Zahnbürste 2 ein eiförmiges bzw. kalottenförmig oder in anderer Weise rotationssymmetrisch konvex gewölbtes Flächenstück bildet, das sich in die genannte Lagermulde 10a einschmiegt. Vorteilhafterweise kann eine der Lagerflächen 10a bzw. 10b oder auch beide eine Abflachung aufweisen, um einen zentrierten Stand zu ermöglichen.

Um die abgestellte Zahnbürste 2 in ihrem aufrechten Stand zu halten, sind im Bereich der Lagermittel 9 zwischen der Zahnbürste 2 und der Basisstation 7 wirkende magnetische Haltemittel 11 vorgesehen, die zentrierend wirken und die genannte Zahnbürste 2 in ihrer senkrecht stehenden Ruhestellung halten. Die genannten magnetischen Haltemittel 11 können hierbei einen Permanentmagneten in der Basisstation 7 enthalten, der auf ein metallisches Lagerelement beispielsweise in Form eines Lagerrings im Endstück des Handteils 3 wirkt. Die magnetischen Haltemittel 11 sind dabei vorteilhafterweise derart ausgebildet, dass auf den Handteil 3 ein rückstellendes Moment wirkt, wenn der Handteil 3 aus seiner zentrierten Sollstellung ausgelenkt ist bzw. wird. Diese Rückstellvorrichtung wird in der gezeichneten Ausführung von den magnetischen Haltemitteln 11 gebildet.

Die Zahnbürste 2 wird dabei von dem Basisteil 7 her vorteilhafterweise induktiv geladen. Dabei ist der Ladeanschluss 6 des Handteils 3 induktiv arbeitend ausgebildet ebenso wie ein an der Basisstation 7 vorgesehener, damit zusammenwirkender Ladeanschluss 12. Beide Ladeanschlüsse 6 und 12 sind vorteilhafterweise zur Umgebung hin abgedeckt bzw. gekapselt. Insbesondere können sie unter dem Gehäuse des Handteils 3 bzw. der Basisstation 7 angeordnet sein, so dass ein berührungsloses Übertragen des Ladestroms erfolgt. Damit die Magnetfelder der Standeinrichtung sich nicht mit dem elektromagnetischen Wechselfeld gegenseitig abschwächend überlagern können beide Einrichtungen "verschachtelt" zueinander angeordnet sein. Z.B. ist in einer Variante der Standmagnet so ausgebildet, dass dieser die Induktionspulen für die elektromagnetische Kopplung (zur Übertragung des Ladestromes) umschließt. Auch eine umgekehrte Anordnung mit den Standmagneten umschließender Spule ist in einer weiteren Variante vorgesehen. Der Standmagnet ist in der Basisstation oder/ und im unteren Abschnitt des Handgriffes angeordnet. Dieser Gegenstand der induktiven Energieübertragung mit Standmagnet ist beliebig mit anderen Ausführungsformen kombinierbar und kann auch unabhängiger Gegenstand der Erfindung sein.

Die Basisstation 7 dient weiterhin als Ablage für eine Anzeigevorrichtung 13, die vorteilhafterweise ein elektronisches Anzeigeelement 14 in Form eines Bildschirms bzw. Displays umfasst, das beispielsweise als LCD-Bildschirm ausgebildet sein kann.

Die genannte Anzeigevorrichtung 13 ist hierbei separat von der Basisstation 7 als Stand-alone-Einheit ausgebildet, die an die Basisstation 7 angedockt werden kann, um von Letzterer geladen zu werden, aber auch von der Basisstation 7 entfernt separat betrieben werden kann.

In der gezeichneten Ausführungsform umfasst die Anzeigevorrichtung 13 hierbei einen Basiskorpus 15, der den Boden der Anzeigevorrichtung 13 bildet und das genannte Anzeigeelement 14 trägt. Über das genannte Anzeigeelement 14 ist in vorteilhafter Ausbildung der Erfindung eine transparent Abdeckglocke 16 gestülpt, die das Anzeigeelement 12 abdeckt bzw. einkapselt und vorteilhafterweise fluiddicht mit dem genannten Basiskorpus 15 verbunden ist, so dass das Anzeigeelement 12 unter der Abdeckglocke 13 eingebettet ist.

Zur Energieversorgung des Anzeigeelements 14 ist in den Basiskorpus 15 ein Energiespeicher in Form eines Akkus integriert, der über einen Ladeanschluss 17 von der Basisstation 7 her ladbar ist. Vorteilhafterweise sind auch hier der Ladeanschluss 17 an der Anzeigevorrichtung 13 sowie der damit zusammenwirkende Ladeanschluss 18 der Basisstation 7 induktiv arbeitend ausgebildet, so dass der Ladestrom berührungslos übertragen werden und die Ladeanschlüsse 17 bzw. 18 gegen Feuchtigkeit eingebettet, insbesondere unter dem Gehäuse des jeweiligen Teils abgedeckt sein können.

Wie Fig. 1 zeigt, bildet die Unterseite des Basiskorpus 15 der Anzeigevorrichtung 13 eine Aufstandsfläche, mit der die Anzeigevorrichtung 13 auf einer beliebigen ebenen Fläche abgestellt werden kann.

Mittels einer nicht eigens gezeigten Kommunikationsschnittstelle 19 kann die Anzeigevorrichtung 13 mit der Zahnbürste 2 kommunizieren. Zur drahtlosen Kommunikation ist hierbei an der Anzeigevorrichtung 13 ein Sender/Empfänger-Baustein vorgesehen, mit dem ein entsprechender Sender/Empfänger-Baustein am Handteil 3 der Zahnbürste kommunizieren kann, wobei vorteilhafterweise Daten in beide Richtungen übertragen werden können. Beispielsweise kann eine Bluetooth-Schnittstelle an der Anzeigevorrichtung 13 sowie der Zahnbürste 2 vorgesehen sein, um eine Bluetooth-Verbindung zwischen beiden Teilen aufzubauen.

Die Anzeigevorrichtung 13 weist weiterhin eine Steuervorrichtung 20 auf, die die Darstellungen auf dem Anzeigeelement 12 steuert und von dem Handteil 3 der Zahnbürste 2 erhaltene Steuerbefehle in entsprechende Grafikbefehle für die Bildschirmdarstellung umsetzt.

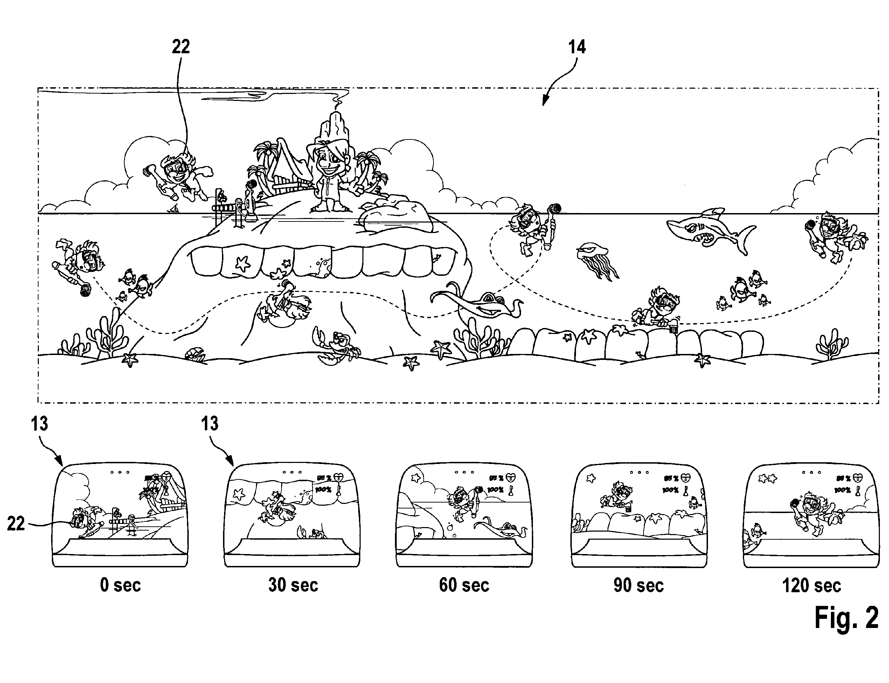

Insbesondere kann die genannte Steuervorrichtung 21 ein Videospiel auf dem Anzeigeelement 14 darstellen und interaktiv steuern, so wie dies in Fig. 2 exemplarisch dargestellt ist. Vorteilhafterweise wird auf dem Anzeigeelement 14 zumindest ein Avatar 22 und/oder ein virtuelles Element dargestellt, das über den Bildschirm bewegbar bzw. führbar und/oder über den Bildschirmhintergrund bewegbar und führbar ist. In der gezeichneten Ausführung wird der Avatar 22 von einer Kinderfigur gebildet, die über eine Insel sowie in der Unterwasserwelt vor der Insel bewegbar ist, um ein unter Wasser liegendes Riff, das die Zähne eines zu reinigenden Gebisses versinnbildlicht, zu reinigen.

Der genannte Avatar 22 kann hierbei durch die Zahnbürste 2 über die Bildschirmdarstellung bzw. das Anzeigeelement 14 navigiert werden. Hierzu umfasst der Handteil 3 der Zahnbürste 2 Navigationssteuermittel zur Erzeugung von Navigationsbefehlen, die über die genannte Kommunikationsschnittstelle 19 bzw. 20 auf die Steuervorrichtung 21 übertragen werden und die Bewegung des Avatars 22 auf dem Anzeigeelement 14 steuern. In der gezeichneten Ausführung gemäß Fig. 4 umfassen hierbei die genannten Navigationssteuermittel einen händisch betätigbaren Navigationsschalter 23, der grundsätzlich verschieden ausgebildet sein kann und beispielsweise nach Art eines an Laptops bekannten Mouseballs gestaltet sein kann, der Betätigungen bzw. Kraftbeaufschlagungen in verschiedenen Richtungen erkennt und in Navigationssteuersignale verschiedener Richtungen umsetzt.

Um Kindern die Navigation des Avatars 22 zu vereinfachen, ist der Navigationsschalter 23 am Handteil 3 vorteilhafterweise als Vierfachdruckschalter ausgebildet, der in vier Richtungen orientierte Druckabschnitte aufweist, die vorteilhafterweise nach Art eines Kreuzes zueinander positioniert sind. Durch Niederdrücken eines oder auch zweier nebeneinander liegender Druckabschnitte kann ein in die entsprechende Richtung gehendes, ggf. auch überlagertes Navigationssteuersignal erzeugt werden, das in eine Bewegung des Avatars in die entsprechende Richtung umgesetzt wird. Hierbei kann eine feste Richtungszuordnung zwischen den Druckabschnitten und dem Bildschirm vorgegeben sein, beispielsweise dergestalt, dass das Niederdrücken des zum Aufsatzteil 4 hin gerichteten Druckabschnitts stets eine Bewegung des Avatars 22 nach oben zum oberen Bildschirmrand hin usw. bewirkt. Alternativ kann die Richtungszuordnung auch von der Ausrichtung der in der virtuellen Darstellung gezeigten Bürste abhängen, so dass die virtuelle Darstellung der Bürste ungeachtet ihrer Drehstellung im Bildschirm beispielsweise stets nach rechts quer zur Längsachse der virtuellen Bürstendarstellung bewegt wird, wenn der an der echten Zahnbürste rechts liegende Druckabschnitt niedergedrückt wird. Dies ist jedoch ein komplexeres Steuerverfahren, das weniger für Kinder geeignet ist, gleichwohl jedoch den Spielanreiz für Erwachsene erhöhen kann. Alternativ ist der Navigationsschalter 23 ein Taster, der zu betätigen ist, sobald bestimmte Positionen/Konfigurationen auf dem Display zu erkennen sind. Weiter alternativ ist der Navigationsschalter 23 auch als Ein/Aus Schalter der elektrischen Zahnbürste (z.B. mit längerer Andrückzeit, um die Zahnbürste Ein und Auszuschalten als zum bedienen der Displayfunktionen. In weiterer Alternative sind der Ein/Aus-Schalter der elektrischen Zahnbürste und der Navigationsschalter 23 separat, vorzugsweise an zwei gegenüberliegenden oder sonstigen Seiten des Zahnbürstenhandgriffes ausgebildet.

Alternativ oder zusätzlich zu dem genannten händisch betätigbaren Navigationsschalter 23 können Navigationssteuersignale an dem Handteil 3 auch aus Betriebsparametern der Zahnbürste 2 abgeleitet werden. Insbesondere können mittels geeigneter Erfassungsvorrichtungen beispielsweise in Form von Bewegungs- und/oder Beschleunigungssensoren Bewegungs- bzw. Beschleunigungssignale erzeugt werden, die den Bewegungen, insbesondere Putzbewegungen der Zahnbürste 2 entsprechen, so dass die virtuelle Darstellung des Avatars 22 und/oder des von diesem gehaltenen virtuellen Bürstenteils entsprechend den tatsächlichen Bewegungen der Zahnbürste 2 navigiert wird. Vorteilhafterweise kann in die Zahnbürste 2 auch ein Neigungssensor integriert sein, der die Neigung bzw. Orientierung der Zahnbürste 2 im Raum erfasst, so dass der Avatar 2 nicht nur hin und her bewegt, sondern auch verkippt werden kann. Vorteilhafterweise wird die Bildschirmdarstellung des Avatars 22 synchron mit den Bewegungen und/oder Druckschalterbetätigungen an der Zahnbürste 2 bewegt.

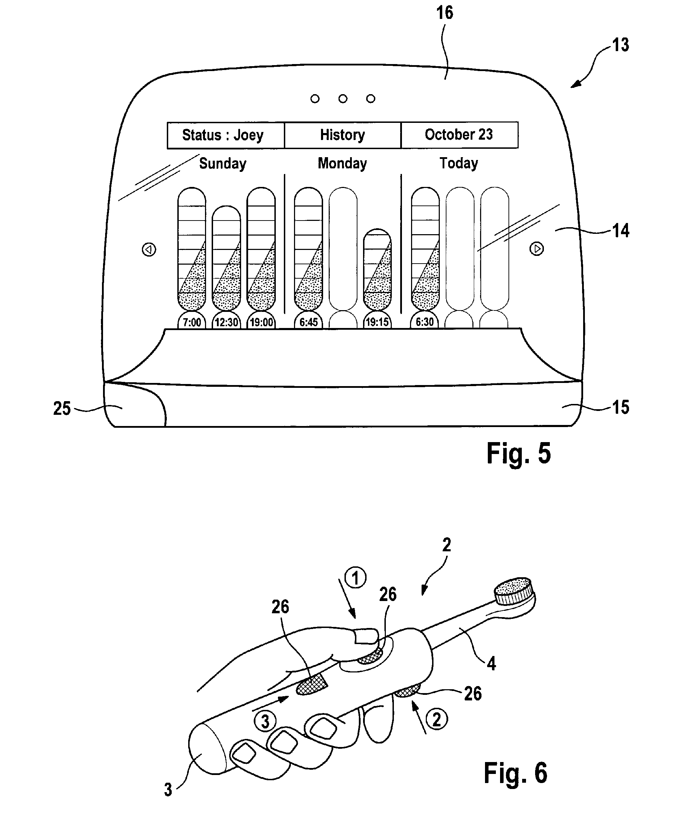

Wie Figur 5 zeigt, ist die Bildschirmdarstellung der Anzeigevorrichtung 13 durch eine Umschaltvorrichtung von den vorhergehenden Figuren gezeigten Videospiel auf einem mit dem Videospiel nicht in Verbindung stehenden Informationsinhalt umschaltbar, wobei hier grundsätzlich in der eingangs genannten Weise verschiedene Informationen dargestellt werden können. In der gezeichneten Ausführungsform wird eine statische Auswertung der Putzzeit an bestimmten Tagen dargestellt, die von einem Auswertebaustein der Steuervorrichtung 21 generiert werden. Dabei kann z.B. ausgewertet werden, ob morgens, mittags und abends und je wie lange (sieh Balkenlänge) und ob eine Schwellzeitwert überschritten wurde. Es könnten prinzipiell auch andere Betriebsparameter ausgewertet und dargestellt werden. Vorteilhafterweise werden die ausgewerteten Betriebsdaten individuell abgespeichert, dass heißt einem jeweiligen Benutzer zugeordnet gespeichert derart, dass sie auch individuell wieder aufrufbar sind. Dies kann vorteilhafterweise der Gestalt erfolgen, dass die ausgewerteten Betriebsparameter und/oder die anderen Informationen zusammen mit einem Identifikationscode abgespeichert werden, der einem Aufsatzteil der Zahnbürste zugeordnet ist. Im gezeichneten Ausführungsbeispiel sind die Putzzeiten für einen Benutzer namens Joey dargestellt.

Die Umschaltvorrichtung zur Umschaltung der Bildschirmdarstellung von dem Videospiel auf die Auswertungen und umgekehrt kann mittels einer Umschalttaste 25 betätigt werden, die in der Figur 5 gezeichneten Ausführungsform an der Anzeigevorrichtung 13 in Form eines Druckschalters vorgesehen ist. Sind von dem Auswertebaustein der Steuervorrichtung 21 verschiedene Auswerte-Datensätze generiert worden, beispielsweise um verschiedene Auswertungen verschiedener Betriebsparameter eines Benutzers oder die ausgewerteten Betriebsparameter verschiedener Benutzer bereit zu stellen, kann durch die genannte Umschalttaste 25 durch mehrmaliges Drücken der Reihe nach zwischen den verschiedenen Bildschirmdarstellungen umgeschaltet werden. Wie Figur 6 zeigt, kann auch an dem Handteil 3 der Zahnbürste 2 eine Bildschirmsteuertaste 26 vorgesehen sein, die grundsätzlich verschiedene Funktionen des Bildschirms steuern können. Insbesondere kann eine solche Steuertaste 26 eine Umschalttaste bilden, mittels derer die Bildschirminhalte in der genannten Art und Weise weitergeschaltet werden können und/oder zurückgeschaltet werden können.

Wie Figur 6 zeigt, kann die Steuertaste 25 hierbei grundsätzlich an verschiedenen Stellen angeordnet sein und/oder es können mehrere solcher Steuertasten 26 vorgesehen sein. Vorteilhafterweise kann eine Steuertaste auf einer Vorderseite des Handteils 3 insbesondere im Abschnitt, in dem ein Daumen zu liegen kommt, angeordnet sein. Alternativ oder zusätzlich kann eine Steuertaste 26 auf der Rückseite des Handteils 3, insbesondere im Bereich eines dort zu liegen kommenden Fingers platziert sein.

Alternativ oder zusätzlich kann eine Steuertaste 26 auch in einem anderen Abschnitt des Griffteils vorgesehen sein.

Die Belegung der Steuertaste 26 kann grundsätzlich verschieden ausgebildet sein, insbesondere veränderlich ausgebildet sein, beispielsweise der Gestalt, dass in Abhängigkeit des Betriebszustands der Zahnbürste 2 und/oder in Abhängigkeit des auf der Anzeigevorrichtung 13 dargestellten Bildschirminhalts der Steuertaste 26 verschiedene Funktionen zugeordnet sind. Läuft beispielsweise ein Videospiel auf der Anzeigevorrichtung 13, kann eine Steuertaste 26 die genannte Umschalttaste zum Umschalten des Bildschirminhalts bilden. Die genannte oder eine weitere Steuertaste 26 kann alternativ dann, wenn ein Videospiel auf der Anzeigevorrichtung 13 läuft, eine Betätigungstaste zur Betätigung von Spielfunktionen, beispielsweise von Aktionen des Avatars 22 bilden. Wird indes beispielsweise die Anzeigevorrichtung als elektronischer Bilderrahmen verwendet, dem von einer Bildspeicherquelle her Bilder eingespielt werden, kann eine der genannten Steuertasten 26 dahingehend belegt sein, dass sie ein Weiterschalten von Bild zu Bild bewirken. Ist andererseits auf dem Bildschirm der Anzeigevorrichtung 13 ein Steuerungsmenü dargestellt, beispielsweise vor Beginn eines Spiels, um ein bestimmtes Spiel auszuwählen, kann die genannte Steuertaste 26 eine Eingabetaste zur Betätigung von Schaltflächen bilden.

Alternativ oder zusätzlich kann auch die zuvor genannte Navigationstaste 23 eine variable Belegung besitzen, die insbesondere in Abhängigkeit des Betriebszustands des Pflegewerkzeugs und/oder in Abhängigkeit eines auf der Anzeigevorrichtung 13 dargestellten Bildschirminhalts verändert wird. Ist beispielsweise in der zuvor genannten Weise ein Steuerungsmenü dargestellt, kann die genannte Navigationstaste 23 einen Navigationscursor bilden, um durch das Steuerungsmenü zu navigieren und entsprechende Schaltflächen durch Anklicken - beispielsweise durch schnell aufeinander folgendes Doppelklicken eines Betätigungsabschnitts - auszuwählen. Wird indes ein Videospiel auf der Anzeigespiel auf der Anzeigevorrichtung 13 dargestellt, kann die genannte Navigationstaste 23 in der beschriebenen Art und Weise dazu verwendet werden den Avatar 22 zu steuern.

Alternativ oder zusätzlich kann die genannte Steuertaste 26 und/oder die genannte Navigationstaste 23 in einem Programmiermodus dazu verwendet werden, Bildschirminhalte individuell abzuändern und/oder individuell zu generieren bzw. zu gestalten, beispielsweise dadurch, dass in einem dem Avatar 22 zugeordneten Namensfenster ein individuell programmierbarer Name generiert wird, der dann in den Bildschirmdarstellungen des Videospiels verwendet wird.

Die technische Ausführung der genannten Navigations- und Steuertasten 23 bzw. 26 an dem Handteil 3 der Zahnbürste 2 kann grundsätzlich verschieden beschaffen sein. In vorteilhafter Weiterbildung der Erfindung sind jeweilige Schalter jeweils einer flexiblen Weichkomponente platziert, welche die Betätigung eines jeweils dahinter liegenden Tasters ermöglicht und sogleich für eine Abdichtung gegenüber Flüssigkeiten sorgt. Die genannte flexible Weichkomponente kann einen integralen Bestandteil des Gehäuses des Handteils 3 bilden, das beispielsweise in einem Zweikomponenten-Spritzkursverfahren hergestellt sein kann.

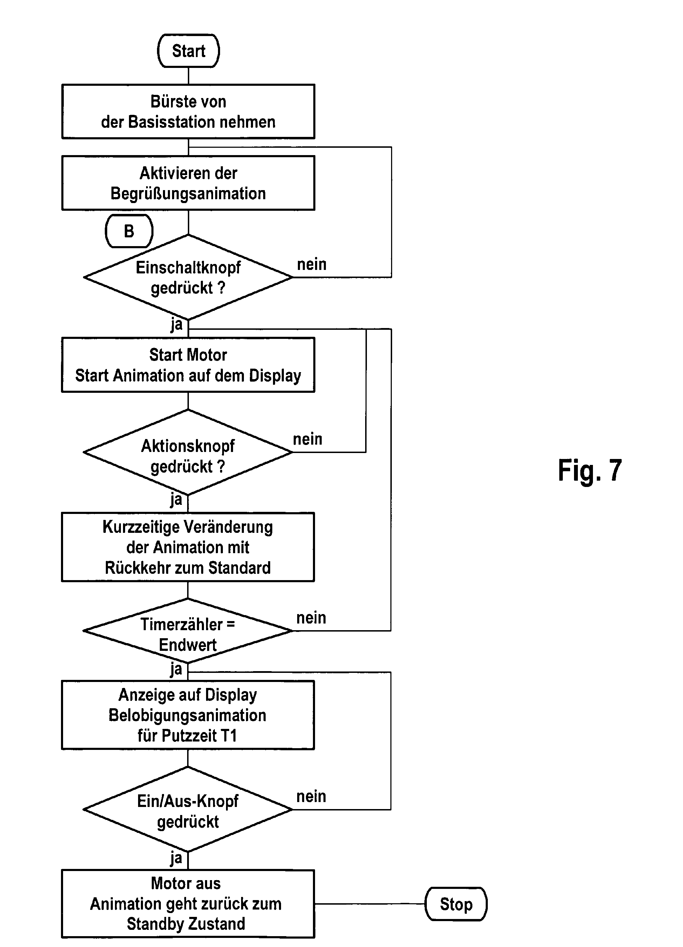

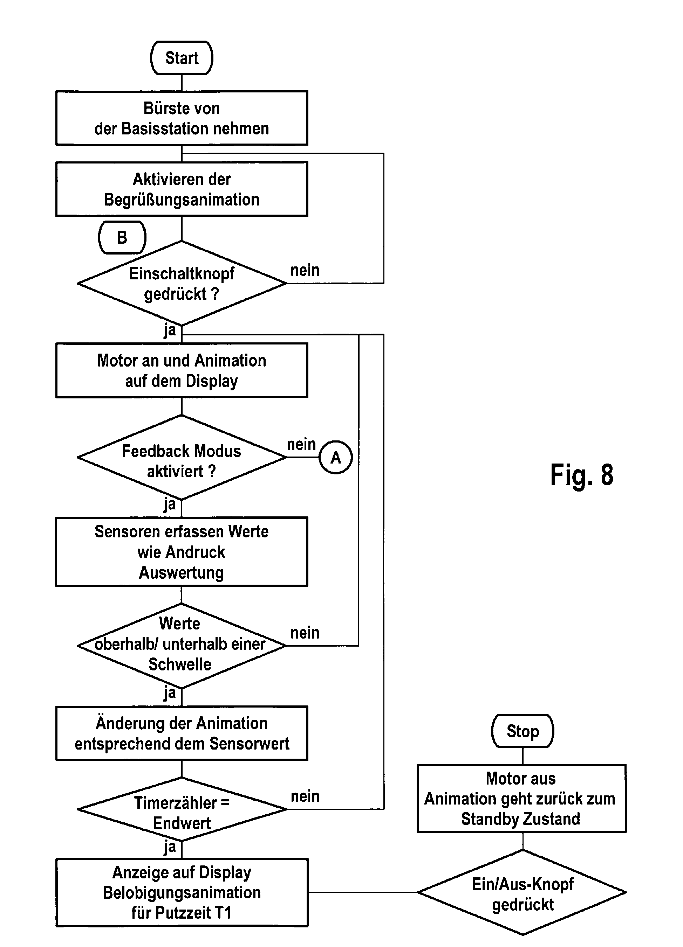

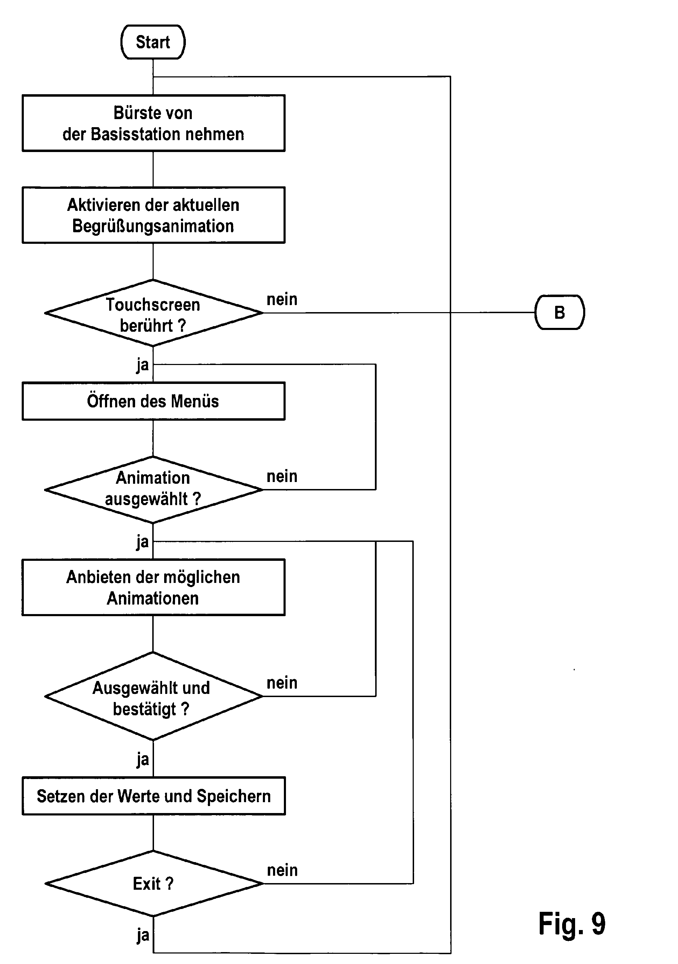

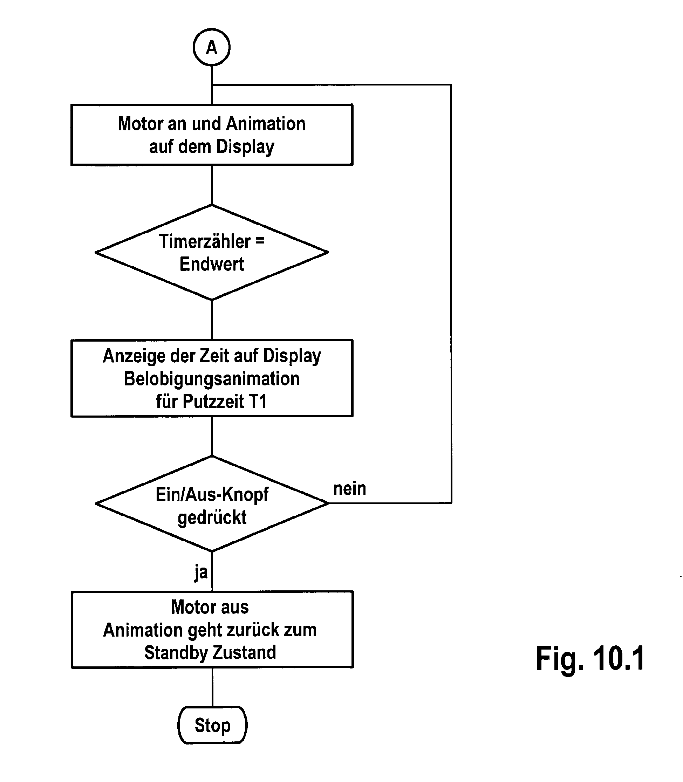

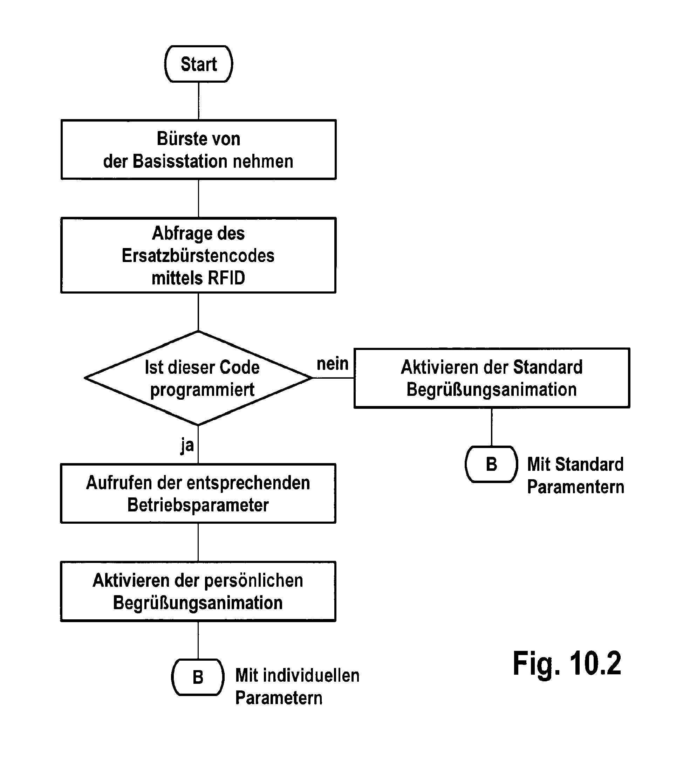

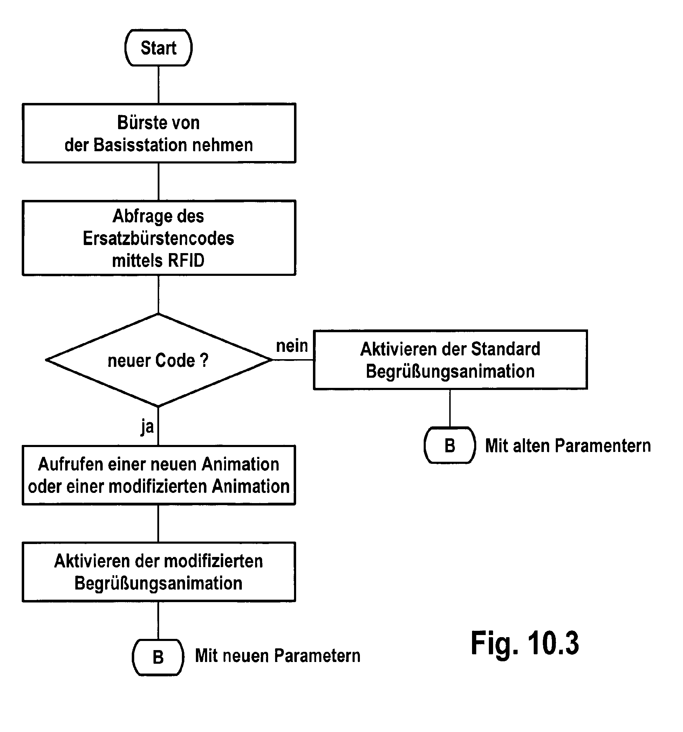

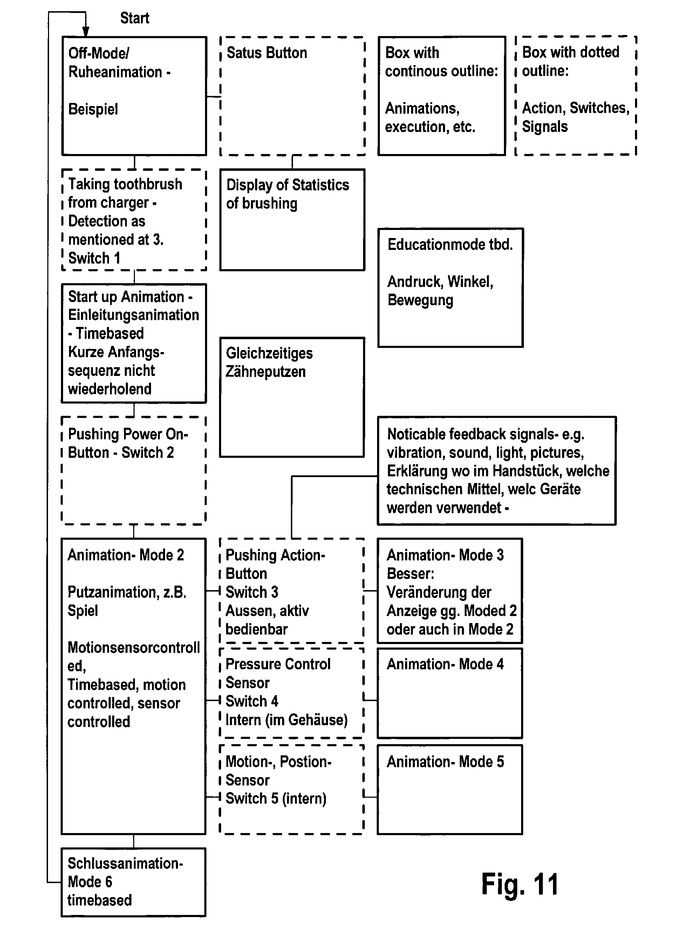

Die in den Figuren 7 bis 11 dargestellten Flussdiagramme können beliebig miteinander kombiniert oder durch andere Abläufe ergänzt bzw. abgeändert werden.

## Patentansprüche

1. Körperpflegegerät des persönlichen Bedarfs, insbesondere Zahnputzvorrichtung, mit einem handführbaren Pflegewerkzeug, insbesondere Zahnbürste (2) sowie einer Anzeigevorrichtung (13) zur Anzeige von interaktiven Darstellungen, die mittels einer Steuervorrichtung (21) von dem Pflegewerkzeug her interaktiv steuerbar sind, **dadurch gekennzeichnet, dass** die Steuervorrichtung (21) einen Spielecontroller zur Steuerung eines Videospiels auf der Anzeigevorrichtung (13) sowie einen Informationscontroller zur Bereitstellung von Informationen auf der Anzeigevorrichtung (13) umfasst, wobei eine Umschaltvorrichtung, die durch eine Umschalttaste (25, 26) betätigbar ist, zum Umschalten der durch den Spielecontroller generierten Spieldarstellung zu einer von dem Informationscontroller generierten Informationsdarstellung auf der Anzeigevorrichtung 13 und/oder umgekehrt vorgesehen ist.

2. Körperpflegegerät nach dem vorhergehenden Anspruch, wobei der genannte Informationscontroller eine Auswerteeinheit zur Auswertung von erfassten Betriebsparametern aufweist und/oder mit einer Auswerteeinheit verbindbar ist, wobei durch die Umschaltvorrichtung die von dem Spielecontroller dargestellte Spieldarstellung zu einer ausgewertete Betriebsparameter wiedergebenden Auswertedarstellung und/oder umgekehrt umschaltbar ist.

3. Körperpflegegerät nach dem vorhergehenden Anspruch, wobei die auswertbaren Betriebsparameter zumindest einen Parameter aus der Gruppe umfassend Pflegedauer, Pflegezeit, Pflegebewegung, Pflegeposition, Pflegewerkzeuggeschwindigkeit, Pflegewerkzeugbeschleunigung und Pflegewerkzeugandruckkraft umfasst.

4. Körperpflegegerät nach einem der vorhergehenden Ansprüche, wobei die Umschalttaste (25) an der Anzeigevorrichtung (13) vorgesehen ist.

5. Körperpflegegerät nach einem der vorhergehenden Ansprüche, wobei die oder eine weitere Umschalttaste (26) an dem Pflegewerkzeug zum Umschalten des Bildschirminhalts der Anzeigevorrichtung (13) von dem Pflegewerkzeug her vorgesehen ist.

6. Körperpflegegerät nach dem Oberbegriff des Anspruchs 1 oder einem der vorhergehenden Ansprüche, wobei das Pflegewerkzeug eine in ihrer Funktionsbelegung veränderbare Steuertaste (23; 26) aufweist.

7. Körperpflegegerät nach dem vorhergehenden Anspruch, wobei die Belegung der genannten Steuertaste (23; 26) von der Steuervorrichtung (21) in Abhängigkeit eines Betriebszustands des Pflegewerkzeugs und/oder in Abhängigkeit einer Darstellung auf der Anzeigevorrichtung (13) veränderbar ausgebildet ist.

8. Körperpflegegerät nach dem Oberbegriff des Anspruchs 1 oder einem der vorhergehenden Ansprüche, wobei zur Anzeige auf der Anzeigevorrichtung (13) gespeicherte Darstellungen mittels einer an dem Körperpflegegerät vorgesehenen Eingabevorrichtung (23; 26) individuell abänderbar und/oder individuell gestaltbar ausgebildet und in einem Speicherbaustein mit einem Individualcode verknüpft abspeicherbar sein.

9. Körperpflegegerät nach dem vorhergehenden Anspruch, wobei die gespeicherten Darstellungen jeweils zumindest einen unveränderbaren Grundabschnitt und zumindest einen ergänzbaren Einfügeabschnitt zur Ergänzung der gespeicherten Darstellung durch eine individuell gestaltete Darstellung aufweisen.

10. Körperpflegegerät nach einem der vorhergehenden Ansprüche, wobei die Eingabevorrichtung ein Touchscreen zur Eingabe der individuellen Abänderungen und/oder Gestaltungen umfasst.

11. Körperpflegegerät nach einem der vorhergehenden Ansprüche, wobei die Eingabevorrichtung zur individuellen Abänderung und/oder Gestaltung der gespeicherten Darstellungen eine Programmier-Steuertaste vorzugsweise in Form einer Cursor-Steuertaste zum Anklicken von Display-Schaltflächen und/oder auf der Anzeigevorrichtung (13) dargestellte Eingabeelemente aufweist.

12. Körperpflegegerät nach dem vorhergehenden Anspruch, wobei die Programmiersteuertaste (26) an dem Pflegewerkzeug vorgesehen ist.

13. Körperpflegegerät nach einem der beiden vorhergehenden Ansprüche, wobei die Belegung der Programmiersteuertaste (26) in Abhängigkeit der auf der Anzeigevorrichtung 13 angezeigten Darstellung veränderbar ausgebildet ist, vorzugsweise derart, dass die Programmiersteuertaste bei Ablauf eines Videospiels auf der Anzeigevorrichtung (13) eine Navigationstaste zur Navigierung eines virtuellen Bildschirmelements und/oder eines Avatars (22) bildet und bei der Darstellung eines Steuerungsmenüs auf der Anzeigevorrichtung (13) eine Cursorsteuertaste.

14. Körperpflegegerät nach einem der vorhergehenden Ansprüche, wobei eine Auswahlvorrichtung zur Auswahl mehrerer speicherbarer Spiele zur Anzeige auf der Anzeigevorrichtung (13) vorgesehen ist, wobei vorzugsweise zumindest eines der auswählbaren Spiele gespeicherte Darstellungen enthält, die von der genannten Eingabevorrichtung individuell abänderbar und/oder gestaltbar ausgebildet sind.

15. Körperpflegegerät nach einem der vorhergehenden Ansprüche, wobei die Anzeigevorrichtung (13) einen von der Basisstation (7) und dem Pflegewerkzeug separat ausbildeten und separat positionierbaren Baustein bildet und eine Kommunikationsschnittstelle (19) zur Kommunikation mit der Basisstation (7) und/oder mit dem Pflegewerkzeug auch im hiervon separaten Zustand aufweist.

16. Körperpflegegerät nach einem der vorhergehenden Ansprüche, wobei die Anzeigevorrichtung (13) einen ladbaren Energiespeicher besitzt, wobei an der Anzeigevorrichtung (13) und der Basisstation (7) miteinander in Wirkverbindung bringbare, vorzugsweise berührungslose, Ladeanschlüsse (17,18) zum Laden der Anzeigevorrichtung (13) vorgesehen sind.

17. Körperpflegegerät nach einem der vorhergehenden Ansprüche, wobei das Pflegewerkzeug einen ladbaren Energiespeicher sowie einen induktiven Ladeanschluss (12) zum vorzugsweise induktiven Laden des Energiespeichers durch die Basisstation (7) aufweist.

18. Körperpflegegerät nach einem der vorhergehenden Ansprüche, wobei die Anzeigevorrichtung (13) Aufstandsmittel zum Abstellen auf einer ebenen Fläche sowie an die Basisstation (7) formangepasste Lagermittel zur Lagerung der Anzeigevorrichtung (13) an der Basisstation (7) aufweist.

19. Körperpflegegerät nach einem der vorhergehenden Ansprüche, wobei die Anzeigevorrichtung (13) einen Spielecontroller zur Steuerung eines an der Anzeigevorrichtung (13) anzeigbaren Videospieles enthält, an den über die Kommunikationsschnittstelle (19) von dem Spielecontroller verarbeitbare Spielsteuerbefehle sendbar sind.

20. Körperpflegegerät nach einem der vorhergehenden Ansprüche, wobei ein Spielecontroller zur Steuerung eines an der Anzeigevorrichtung (13) anzeigbaren Videospiels an der Basisstation (7) und/oder dem Pflegewerkzeug vorgesehen ist, von dem aus Graphiksteuerbefehle über die Kommunikationsschnittstelle (19) an die Anzeigevorrichtung (13) sendbar sind.

21. Körperpflegegerät nach einem der vorhergehenden Ansprüche, wobei die Anzeigevorrichtung (13) einen elektronischen Bilderrahmen bildet, der einen separaten Bilddatenanschluss zum Anschließen einer externen Bilddatenquelle besitzt.

22. Körperpflegegerät nach dem vorhergehenden Anspruch, wobei die Anzeigevorrichtung (13) einen Sequenzsteuerbaustein zum automatischen Weiterschalten des jeweils angezeigten Bildes, das aus der Bilddatenquelle einspeisbar ist, aufweist, und/oder einen durch eine Umschalttaste betätigbaren Schaltbaustein zum manuell gesteuerten Weiterschalten des jeweils angezeigten Bildes aufweist.

23. Körperpflegegerät nach einem der vorhergehenden Ansprüche, wobei das Pflegewerkzeug eine zusätzliche Anzeigevorrichtung (24) aufweist, die in Abhängigkeit eines Ereignisses, insbesondere eines Spielablaufs an der separat ausgebildeten Anzeigevorrichtung (13), und/oder in Abhängigkeit eines Betriebsparameters des Pflegewerkzeugs gesteuert ist, wobei vorzugsweise die an dem Pflegewerkzeug vorgesehene Anzeigevorrichtung (24) ein beleuchtbares Anzeigeelement, insbesondere beleuchtbaren Anzeigering, an dem Handteil (3), vorzugsweise einem stirnseitigen Ende des Handteils (3) des Pflegewerkzeugs aufweist.

24. Körperpflegegerät nach einem der vorhergehenden Ansprüche, wobei das Pflegewerkzeug Navigationssteuermittel zur Navigation eines virtuellen Bildschirmelements, und/oder Avatars (22) über die Anzeigevorrichtung (13) und/oder über das darauf dargestellte Hintergrundbild aufweist, wobei vorzugsweise die Navigationssteuermittel einen händisch betätigbaren Navigationsschalter (23) umfassen, der vorteilhafterweise mehrere zu verschiedenen Richtungen hin angeordnete Druckabschnitte zur Erzeugung von in verschiedene Richtungen weisenden Navigationssteuersignalen aufweisen, und/oder die Navigationssteuermittel Verschiebemittel zum translatorischen Verschieben des Avatars (22) und Rotationsmittel zum Verdrehen des Avatars (22) aufweist, wobei vorzugsweise die Verschiebemittel und die Rotationsmittel unabhängig voneinander, ggf. aber gleichzeitig betätigbar ausgebildet sind.
